(19) Europäisches Patentamt
European Patent Office
Office européen des brevets

(11) **EP 2 298 508 B1**

(12) **EUROPÄISCHE PATENTSCHRIFT**

(45) Veröffentlichungstag und Bekanntmachung des Hinweises auf die Patenterteilung:
**08.10.2014   Patentblatt 2014/41**

(51) Int Cl.:
***B25J 9/16*** *(2006.01)*    ***G01B 21/04*** *(2006.01)*

(21) Anmeldenummer: **10008677.6**

(22) Anmeldetag: **19.08.2010**

(54) **Vermessung eines Manipulators**

Measurement of a manipulator

Mesure d'un manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **16.09.2009   DE 102009041734**

(43) Veröffentlichungstag der Anmeldung:
**23.03.2011   Patentblatt 2011/12**

(73) Patentinhaber: **KUKA Roboter GmbH**
**86165 Augsburg (DE)**

(72) Erfinder:
• **Tscharnuter, Dietmar**
**86316 Friedberg (DE)**
• **Purrucker, Thomas**
**80689 München (DE)**
• **Groll, Michael**
**86167 Augsburg (DE)**

(74) Vertreter: **Schlotter, Alexander Carolus Paul**
**Wallinger Ricker Schlotter Tostmann**
**Patent- und Rechtsanwälte**
**Zweibrückenstrasse 5-7**
**80331 München (DE)**

(56) Entgegenhaltungen:
**WO-A1-01/00370        WO-A1-99/36216**
**WO-A1-2005/106384    WO-A1-2005/108020**
**WO-A1-2008/101737    WO-A2-2008/107715**
**DE-A1- 19 507 805    US-B1- 7 113 878**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 298 508 B1

**Beschreibung**

Die vorliegende Erfindung betrifft ein Verfahren und eine Vorrichtung zur Vermessung eines Manipulators, insbesondere eines Roboters, sowie die Herstellung einer solchen Vorrichtung.

Manipulatore, beispielsweise Industrieroboter, sollen Posen, in der Regel viele Male, mit hoher Präzision anfahren, um ein Werkzeug in eine gewünschte Position zu bringen.

Insbesondere durch Wärmeabgabe der Antriebsmotoren, Reibung in der Manipulatorkinematik, aber auch Umwelteinflüsse können sich die Manipulatorglieder und -gelenke erwärmen. Die damit einhergehende Gestaltänderung, insbesondere Wärmedehnung, führt dazu, dass trotz gleicher Gelenkstellung, i.e. theoretisch identischer Pose, das Werkzeug nicht mehr dieselbe Position einnimmt.

Daher ist es beispielsweise aus der 10 2004 024 378 A1 bekannt, den Manipulator relativ zu vermessen, um die Abweichung seiner Kinematik während des Betriebs zu erfassen. Dabei fährt der Manipulator in regelmäßigen Rekalibrierungszyklen dieselben Gelenkstellungen, also theoretisch dieselbe Pose, an, und erfasst mittels eines manipulatorgeführten Sensors einen kugelförmigen Referenzkörper. Ändert sich die erfasste Position des stationären Referenzkörpers relativ zum manipulatorgeführten Sensor, kann hieraus die Veränderung der Manipulatorkinematik ermittelt und entsprechend kompensiert werden.

Neben dieser relativen ist auch eine absolute Vermessung von Manipulatoren bekannt, um diese zu kalibrieren bzw. die Parameter eines Manipulatormodells, das einer Manipulatorsteuerung zugrunde liegt, zu bestimmen. Wird beispielsweise eine Bahn eines Industrieroboters offline vorab geplant, hängt es von der Genauigkeit der Modellparameter ab, wie präzise der reale Roboter die theoretisch vorgegebenen Positionen anfährt. Die DE 198 26 395 A1 schlägt hierzu vor, die Position eines manipulatorgeführten Referenzkörpers durch stationäre Kameras zu erfassen und auf Basis der Abweichung dieser tatsächlichen Position von einer durch das Modell bestimmten theoretischen Position die Modellparameter anzupassen.

Die WO 2008/107715 A2 schlägt vor, mittels eines Laser-Trackers am Arm eines Roboters die Position von Retroreflektoren an der Roboterbasis zu erfassen und hieraus die Position des Arms relativ zur Basis präzise zu bestimmen.

Die WO 2008/107715 A2 betrifft eine Vorrichtung und ein Verfahren zur Festlegung von Positionen eines Roboters. Ziel ist es, Positionsvariationen eines Roboters auf Basis von temperatur-bedingten Ausdehnungen oder von Flexibilitäten im Roboter zu kompensieren. Dazu wird ein System vorgeschlagen, welches insbesondere aus 3 Komponenten besteht: einem Laser-Tracker, einen Marker-Ring, welcher an einem beweglichen Elemente des Roboters befestigt wird, und einem Basis-Ring, welcher an der unbeweglichen Basis des Roboters befestigt ist, und welcher ebenfalls Marker aufweist.

Die WO 2005/108020 A1 betrifft eine robotergeführte optische Anordnung sowie ein Verfahren und eine Hilfsvorrichtung zum Einmessen dieser Messanordnung. Ziel ist es, eine roboter-geführte optische Mess-Anordnung schnell und einfach einmessen zu können. Dazu wird vorgeschlagen, eine optische Mess-Anordnung mithilfe eines Abstandshalters an einem Roboter zu befestigen und auf dieser Mess-Anordnung Mess-Marken anzuordnen.

Die WO 01/00370 A1 betrifft ein Verfahren und eine Vorrichtung zum Kalibrieren von Robotermessstationen, Manipulatoren und mitgeführten optischen Messeinrichtungen, insbesondere 3D-Sensoren innerhalb einer Messstationen für Werkstück. Ziel ist es, ein Verfahren und Vorrichtung zum Kalibrierung zu verbessern. Die optische Messeinrichtung kann mit ihrem Arbeitspunkt am Manipulator mittels einer genau positionierbaren Prüfeinrichtung mit einem Referenzmuster kalibriert werden. WO 99/36216 offenbart ähnliche Verfahren und System.

Die WO 2008/101737 A1 betrifft ein Verfahren und eine Vorrichtung zur Steuerung von Robotern zum Schweißen von Werkstücken. Ziel ist es, ein Verfahren zum Schweißen von dreidimensionalen Werkstücken schaffen, welches unabhängig von CAD-Daten des zu schweißenden Werkstücks ist, welches Schweißnähte sowohl in horizontaler als auch vertikaler Richtung automatisch bestimmt und welches eine flexible Reaktion auf sich kurzfristig ändernde konstruktive oder technologische Merkmale des zu schweißenden Werkstücks gestattet.

Die DE 195 07 805 A1 betrifft einen Prüfkörper für Koordinatenmessgeräte und Werkzeugmaschinen. Ziel ist es, eine preiswerte und leichte Vorrichtung zum Prüfen von Koordinatenmessgeräten und Werkzeugmaschinen anzugeben. Dazu wird vorgeschlagen, einen Prüfkörper in Form von Kugel und Lochplatten bzw. Kugel- und Lochreihen als Sandwich-Strukturen auszuführen, wobei so genannte Antastformelemente (Kugeln, Zylindern) symmetrisch zur neutralen Faser der Platte oder Leiste ausgebildet werden.

Aufgabe der vorliegenden Erfindung ist es, die Vermessung eines Manipulators zu verbessern.

Diese Aufgabe wird durch eine Messvorrichtung mit den Merkmalen des Anspruchs 1 bzw. ein Verfahren mit den Merkmalen des Anspruchs 12 gelöst. Ansprüche 7, 8 stellen eine Anordnung bzw. ein Verfahren zur Herstellung einer Messvorrichtung, Anspruch 10 ein Messsystem mit einer erfindungsgemäßen Messvorrichtung, Anspruch 15 und 16 eine Steuervorrichtung, ein Computerprogramm bzw. ein Computerprogrammprodukt, insbesondere einen Datenträger bzw. ein Speichermedium, zur Durchführung eines erfindungsgemäßen Verfahrens unter Schutz. Die Unteransprüche betreffen vorteilhafte Weiterbildungen.

Eine erfindungsgemäße Messvorrichtung zur Vermessung eines Manipulators, insbesondere eines Roboters wie etwa eines Industrie-, Service- oder Leichtbauroboters, vorzugsweise eines Messroboters mit einem oder mehreren robotergeführten Sensor wie beispielsweise Kameras oder Laser-Trackern, weist einen Maßkörper mit einem oder mehreren maßkörperfesten Messpunkten zur Bestimmung einer Position relativ zu einem manipulatorfesten Referenzpunkt, etwa dem Tool Center Point ("TCP") auf.

Der Maßkörper ist in einer bevorzugten Ausführung im Wesentlichen kugelförmig, um in im Wesentlichen allen Raumrichtungen gleiche Bedingungen darzustellen. In einer anderen bevorzugten Ausführung ist der Maßkörper im Wesentlichen quader-, insbesondere würfelförmig, was einerseits Vorzugsorientierungen bietet und andererseits die Bearbeitung erleichtert. Bevorzugt weist der Maßkörper nur eine geringe Wärmeverformung, insbesondere einen Längenausdehnungskoeffizienten $\alpha$ kleiner oder gleich $10.10^{-6}$/K auf, er ist vorzugsweise aus Kohlefaser-verstärktem Kunststoff CFK.

Ein maßkörperfester Messpunkt, nachfolgend Maßkörper-Messpunkt, kann beispielsweise einen Sensor, insbesondere zum Senden bzw. Empfangen elektromagnetischer Strahlung wie beispielsweise eine Kamera oder einen Laser-Tracker aufweisen, mit dem eine Position, insbesondere ein Abstand, relativ zu einem manipulatorfesten Referenzpunkt wie beispielsweise einer reflektierenden Marke, etwa einem Retroreflektor bestimmt wird. Da der Maßkörper vorzugsweise mehrere Maßkörper-Messpunkte aufweist, werden in einer bevorzugten Ausführung umgekehrt Maßkörper-Messpunkte durch Markierung definiert, die von einem, insbesondere optischen, Sensor wie einer Kamera oder einen Laser-Tracker erfasst werden, beispielsweise reflektierende Marken. Zusätzlich oder alternativ können Maßkörper-Messpunkte auch durch geometrische Merkmale, beispielsweise Bohrungen, Nuten, Absätze und dergleichen definiert sein, die dann vorzugsweise von einer Kamera aufgenommen werden, um ihre Position mittels Bilderkennung zu ermitteln.

Als Position wird vorliegend insbesondere eine ein-, zwei- oder dreidimensionale Lage, beschreibbar etwa durch einen kartesischen Abstand oder kartesische Koordinaten in einer Bildebene oder einem dreidimensionalen Bezugssystem, und/oder eine Orientierung, beschreibbar zum Beispiel durch EULER- oder KARDAN-Winkel relativ zu dem Bezugssystem oder Quaternionen, bezeichnet. Die Position eines Punktes kann dementsprechend beispielsweise dessen eindimensionalen Abstand zu einem Bezugspunkt, dessen dreidimensionale Lage in einem Bezugssystem, oder die durch sechs Koordinaten angebbare Lage und Orientierung eines in diesem Punkt definierten Referenzkoordinatensystems, etwa des TCP-Systems, relativ zu einem Bezugssystem umfassen.

Mit dem Maßkörper kann, beispielsweise über ein stab-, rohr- bzw. schaftförmiges Verbindungselement, welches vorzugsweise einstückig mit dem Maßkörper ausgebildet ist, um Montagetoleranzen und thermische Veränderungen zu reduzieren, die Herstellung oder die Montage zu vereinfachen, eine Befestigungseinrichtung, insbesondere ein Flansch oder eine Fußplatte verbunden sein, die zur lösbaren oder unlösbaren Fixierung der Messvorrichtung an einer, vorzugsweise inertialen, Umgebung wie beispielsweise einer Fertigungs- bzw. Roboterzelle, in der die Manipulatorbasis befestigt ist, vorgesehen ist. Hierzu kann die Befestigungseinrichtung entsprechende Bohrungen zur Verschraubung mit der Umgebung aufweisen.

Nach einem ersten Aspekt der vorliegenden Erfindung sind an dieser Befestigungseinrichtung ein oder mehrere Messpunkte, nachfolgend Befestigungseinrichtungs-Messpunkte, angeordnet. Diese können ebenso wie die Maßkörper-Messpunkte durch einen Sensor, von einem Sensor erfassbare Markierungen und/oder geometrische Merkmale definiert sein. Vorzugsweise sind Maßkörper- und Befestigungseinrichtungs-Messpunkte gleichartig ausgebildet, so dass sie durch denselben Sensor, insbesondere eine Kamera, erfasst werden können.

Dadurch kann einerseits die Messvorrichtung, insbesondere eine Position des Maßkörpers relativ zur Befestigungseinrichtung und damit zur Umgebung, an der die Befestigungseinrichtung fixiert ist, überprüft werden. Damit kann beispielsweise eine Verschiebung des Maßkörpers durch eine Kollision mit dem Manipulator erkannt und gegebenenfalls kompensiert werden.

Hierzu werden vorab, beispielsweise mittels einer Koordinatenmessmaschine, eines bildgebenden Verfahrens und/oder eines manipulatorgeführten Sensors, insbesondere optisch, Positionen von Maßkörper-Messpunkten relativ zu einem Messvorrichtungs-Bezugssystem bestimmt, welches bezüglich der Befestigungseinrichtungs-Messpunkte definiert ist.

Dann werden Positionen eines manipulatorfesten Referenzpunktes einerseits relativ zu Maßkörper-Messpunkten und andererseits relativ zu Befestigungseinrichtungs-Messpunkten bestimmt, indem beispielsweise eine Kamera oder ein Laser-Tracker am Werkzeugflansch eines Roboters einerseits Marker oder Retroreflektoren am Maßkörper und andererseits an der Fußplatte aufnimmt und eine Bildverarbeitung oder Abstandsmessung die Relativposition zwischen diesen und dem Werkzeugflansch ermittelt. Hieraus kann die Position der Maßkörper-Messpunkte relativ zu den Befestigungseinrichtungs-Messpunkten und somit des Maßkörpers relativ zur Befestigungseinrichtung bzw. Umgebung ermittelt werden. Weicht diese Position von der vorab bestimmten Position in dem bezüglich der Befestigungseinrichtungs- Messpunkte definierten Messvorrichtungs-Bezugssystem ab, kann hieraus eine Verschiebung bzw. Verdrehung des Maßkörpers gegenüber der Befestigungseinrichtung bzw. Umgebung erkannt werden. In einer vorteilhaften Weiterbildung wird eine solche Verschiebung bzw. Verdrehung des Maßkörpers kompensiert, indem beispielsweise die Verschiebung bzw. Verdrehung gegenüber der Ausgangsposition, in der Positionen von Maßkörper-Messpunkten relativ zu dem Messvorrichtungs-Bezugssystem vermessen worden sind, nun bei der Bestimmung der Positionen von Maßkörper-Messpunkten und manipulatorfestem Referenzpunkt relativ zueinander berücksichtigt werden. Eine solche Erkennung bzw. Kompensation einer Verschiebung bzw. Verdrehung des Maßkörpers wird vorzugsweise bei einer Diagnose durchgeführt.

Andererseits kann dadurch ein Zustand des Manipulators, insbesondere eine thermisch oder mechanisch bedingte Änderung seiner Kinematik, ermittelt werden.

Hierzu werden wiederum Positionen des manipulatorfesten Referenzpunktes relativ zu Maßkörper-Messpunkten bestimmt. Beispielsweise nimmt eine Kamera oder ein Laser-Tracker am Werkzeugflansch Marker auf dem Maßkörper auf, und eine Bildverarbeitung oder Abstandsmessung ermittelt die Relativposition zwischen diesen und dem Werkzeugflansch. Ändert sich diese Relativposition zwischen zwei, vorzugsweise zyklisch durchgeführten, Zustandsprüfungen bzw. Kalibrierungen, kann hieraus eine Veränderung der Manipulatorkinematik ermittelt werden, die in einer bevorzugten Ausführung im kinematischen Modell des Manipulators berücksichtigt wird.

Nach einem zweiten Aspekt der vorliegenden Erfindung, der mit dem vorstehend erläuterten ersten Aspekt kombiniert sein kann, sind, vorzugsweise an der Befestigungseinrichtung oder dem Maßkörper, ein oder mehrere mit der Messvorrichtung verbundene Einmesspunkt zur Bestimmung einer Position relativ zu der Umgebung angeordnet. Solche Einmesspunkte können ebenso wie die Maßkörper- bzw. Befestigungseinrichtungs-Messpunkte durch einen Sensor, von einem Sensor erfassbare Markierungen oder geometrische Merkmale definiert sein. In einer bevorzugten Ausführung sind Einmesspunkte durch Retroreflektoren definiert, deren Position relativ zu der Umgebung durch einen Laser-Tracker bestimmt wird. Ein solcher Laser-Tracker kann auf einem eigenen Stativ angeordnet sein und misst sich vorzugsweise in der Umgebung ein, um dann die raumfeste Position des Maßkörpers relativ zu der Umgebung zu ermitteln.

Wiederum werden vorab, beispielsweise mittels einer Koordinatenmessmaschine, eines bildgebenden Verfahrens und/oder eines manipulatorgeführten Sensors

Positionen von Maßkörper-Messpunkten relativ zu einem Messvorrichtungs-Bezugssystem bestimmt, welches nun bezüglich der Einmesspunkte definiert ist. Werden erster und zweiter Aspekt miteinander kombiniert, wird das Messvorrichtungs-Bezugssystem vorteilhafterweise sowohl bezüglich der Befestigungseinrichtungs-Messpunkte als auch der an der Befestigungseinrichtung angeordneten Einmesspunkte definiert.

Ist nun, beispielsweise durch Vermessung der Einmesspunkte relativ zu einem Umgebungs-Bezugssystem oder durch eine Anordnung von Messvorrichtung und Manipulatorbasis in bekannten Positionen in der Umgebung, etwa einer Fertigungszelle, auch die Position des manipulatorfesten Bezugssystems relativ zur Umgebung bekannt, kann hieraus die Absolutposition der Maßkörper-Messpunkte im manipulatorfesten Bezugssystem, insbesondere einem manipulatorbasisfesten Bezugssystem, ermittelt werden, wobei insofern auch die Manipulatorbasis eine Umgebung darstellen kann.

Damit kann der Manipulator absolut vermessen bzw. kalibriert werden. Insbesondere können durch eine solche Kalibrierung Modellparameter eines Manipulatormodells so angepasst werden, dass dieses die reale Kinematik oder Dynamik des Manipulators möglichst präzise beschreibt.

Da Modellparameter, beispielsweise Steifigkeiten oder elastische Deformationen von Manipulatorgliedern, sich für unterschiedliche Posen unterscheiden können, werden in einer bevorzugten Ausführung wenigstens vier nicht komplanare Maßkörper verwendet. Diese spannen stets ein Volumen im Arbeitsraum des Manipulators auf. Durch Kalibrieren des Manipulators mittels dieser vier Maßkörper, vorzugsweise unter Ausgleich, insbesondere Mittelung der mit den einzelnen Maßkörpern ermittelten Modellparameter, kann so ein Manipulatormodell erstellt bzw. adaptiert werden, welches die Kinematik des Manipulators, insbesondere eine Position eines manipulatorfesten Referenzpunktes wie des TCPs, hochgenau beschreibt.

Zusätzlich oder alternativ, insbesondere bei der relativen Vermessung zur Rekalibrierung, ermöglicht die Kenntnis der Positionen der Absolutpositionen der Maßkörper-Messpunkte im umgebungs- bzw. manipulatorfesten Bezugssystem es, den Maßkörper bzw. die Maßkörper-Messpunkte effizienter anzufahren, da diese nicht mehr iterativ durch einen manipulatorgeführten Sensor erfasst werden, sondern in einer, insbesondere vorab offline durchgeführten, Bahnplanung als Zielkoordinaten zur Verfügung stehen.

Werden ein oder mehrere Messposen solcherart auf Basis eines solchen bezüglich Einmesspunkten und/oder Befestigungseinrichtungs-Messpunkten definierten Messvorrichtungs-Bezugssystems angefahren, ist es bevorzugt, in dem Messvorrichtungs-Bezugssystems Umfahrungspunkte zum kollisionsfreien Anfahren einer Messpose vorzugeben. Sind beispielsweise die Positionen von Markern auf einer Kugeloberfläche eines Maßkörpers im Messvorrichtungs-Bezugssystem und dadurch auch in einem manipulatorfesten Bezugssystem bekannt, können diese Positionen jeweils radial um einen vorgegebenen Abstand von der Kugel weg verschoben werden. Die solcherart definierten Umfahrungspunkte bilden dann ein die Kugel mit Abstand umhüllendes Netz, bei dessen Abfahren mit einem manipulatorgeführten Werkzeug oder Referenzpunkt wie dem TCP eine Kollision zwischen Messvorrichtung und Manipulator vermieden wird.

In einer bevorzugten Ausführung sind ein oder mehrere an der Befestigungseinrichtung angeordnete Einmesspunkte und/oder Befestigungseinrichtungs-Messpunkte in der Befestigungseinrichtung wenigstens teilweise versenkt und/oder durch eine Abdeckung geschützt. Dies schützt die Messpunkte bzw. die sie definierenden Marker, Retroreflektoren oder dergleichen vor schädigenden Umwelteinflüssen.

Bevorzugt weist eine erfindungsgemäße Messvorrichtung drei, vier oder mehr Maßkörper-Messpunkte, Befestigungseinrichtungs-Messpunkte und/oder Einmesspunkte auf. Drei nicht kollineare Befestigungseinrichtungs-Messpunkte bzw. Einmesspunkte gestatten die eindeutige Definition eines Messvorrichtungs-Bezugssystems. Vier nicht kollineare, vorzugsweise aber komplanare Punkte erhöhen die Wahrscheinlichkeit, in verschiedenen, insbesondere beliebigen Orientierungen wenigstens drei Punkte erfassen und so das Bezugssystem definieren zu können. Sind mehr als drei Befestigungseinrichtungs-Messpunkte bzw. Einmesspunkte erfassbar, kann diese Redundanz zur Erhöhung der Präzision genutzt werden, indem beispielsweise mit den Messwerten ein entsprechendes Ausgleichsproblem gelöst wird.

Ein dritter Aspekt der vorliegenden Erfindung, der mit dem vorstehend erläuterten ersten und/oder zweiten Aspekt kombiniert sein kann, betrifft die Herstellung eines Maßkörpers mit maßkörperfesten Messpunkten. Hierzu wird eine, vorzugsweise zwei- oder mehrteilige, Schablone vorgeschlagen, die in einer definierten Orientierung an dem Maßkörper angeordnet werden kann.

Eine solche definierte Orientierung kann beispielsweise dadurch erreicht werden, dass die Schablone einen nicht rotationssymmetrischen Maßkörper wenigstens teilweise an drei paarweise nicht komplanaren Flächen umschließt, beispielsweise eine Grund- und zwei in Kanten an diese angrenzende Seitenflächen eines Würfels. Bei rotationssymmetrischen Maßkörpern, beispielsweise einer Kugel mit einem einstückig angeformten zylinderförmigen Schaft, kann eines von dem Maßkörper und der Schablone eine oder mehrere Vertiefungen und/oder Vorsprünge aufweisen, die bei Anordnung der Schablone in der definierten Orientierung an dem Maßkörper in entsprechende Vorsprünge bzw. Vertiefungen des anderen von dem Maßkörper und der Schablone eingreifen.

Nachdem die Schablone so an dem Maßkörper angeordnet worden ist, werden in durch die Schablone vorgegebenen Positionen Maßkörper-Messpunkte an diesem angeordnet. Beispielsweise kann die Schablone hierzu Durchgangsbohrungen aufweisen, durch die ein Marker, ein Bohrer oder ein Markierungswerkzeug geführt wird. Nach Abnehmen der Schablone können Marker in den durch den Bohrer bzw. das Markierungswerkzeug, beispielsweise einen Stift, gekennzeichneten Positionen angeordnet, beispielsweise aufgeklebt werden.

Auf diese Weise können die Maßkörper-Messpunkte präzise an vorgegebenen Positionen des Maßkörpers angeordnet werden, was beispielsweise ihre Erfassung durch einen manipulatorgeführten Sensor erleichtern kann.

Weitere Vorteile und Merkmale ergeben sich aus den Unteransprüchen und den Ausführungsbeispielen. Hierzu zeigt, teilweise schematisiert:

Fig. 1:    die Vermessung eines Manipulators mittels eines Messsystems nach einer Ausführung der vorliegenden Erfindung;

Fig. 2:    in Draufsicht die Fußplatte der Messvorrichtung des Messsystems nach Fig. 1 längs der dortigen Schnittlinie II-II;

Fig. 3:    eine alternative Messvorrichtung; und

Fig. 4:    die Herstellung der Messvorrichtung nach Fig. 1.

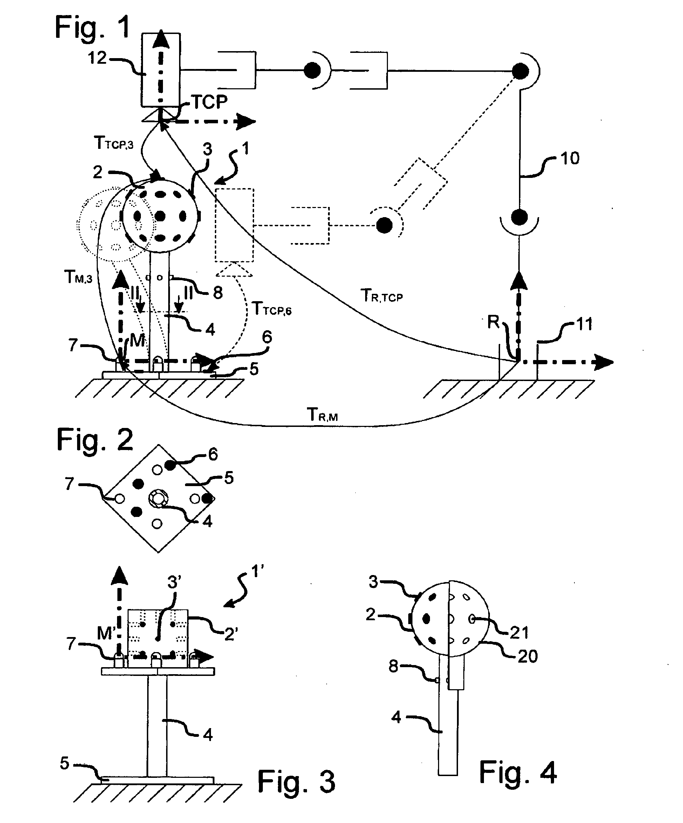

Fig. 1 zeigt ein Messsystem nach einer Ausführung der vorliegenden Erfindung bei der Vermessung eines sechsachsigen Messroboters 10.

Das Messsystem umfasst eine Messvorrichtung 1 mit einem Maßkörper in Form einer Kugel 2, auf der in vorgegebenen Positionen Marker 3 aufgeklebt sind, die von einer CCD-Kamera 12 am Werkzeugflansch des Messroboters 10 erfassbar sind.

Bezugnehmend auf Fig. 1, 4 wird zunächst die Herstellung des Maßkörpers 2 erläutert. Dieser ist aus Kohlefaserverstärktem Kunststoff (CFK) einstückig mit einem integrierten Schaft 4 urgeformt, so dass Maßkörper 2 und Schaft 4 einen geringen Längenausdehnungskoeffizienten $\alpha$ von etwa $0{,}2 \cdot 10^{-6}$/K aufweisen. Der Schaft kann lösbar, beispielsweise mittels Schrauben, oder unlösbar, beispielsweise mittels Kleben, mit einer Befestigungseinrichtung in Form einer Fußplatte 5 verbunden werden, um die gesamte Messvorrichtung 1 durch Verschrauben der Fußplatte 5 mit dem Boden an einer Umgebung in Form einer Montage- oder Roboterzelle zu fixieren.

Um die Marker 3 in vorgegebenen Positionen auf die Kugel 2 aufzukleben, wird eine zweiteilige kalottenförmige Schablone 20 an dieser angeordnet, von der in Fig. 4 eine Schablonenhälfte dargestellt ist. Am Schaft 4 sind ein oder mehrere halbkugelförmige Erhebungen 8 ausgebildet, an den Schabloneninnenseiten entsprechende komplementäre halbkugelförmige Vertiefungen (nicht dargestellt). Durch die ineinander eingreifenden Erhebungen 8 und Vertiefungen kann die Schablone 20 nur in einer oder mehreren definierten Orientierungen an dem rotationssymmetrischen Maßkörper 3 reproduzierbar angeordnet werden.

Die Schablone 20 weist mehrere Durchgangsbohrungen 21 in vorgegebenen Positionen auf. Durch diese kann bei angelegter Schablone beispielsweise ein Markierungsstift geführt werden, um eine Position zum Aufkleben eines Markers 3 nach Abnahme der Schablone 20 zu kennzeichnen, oder unmittelbar ein Marker 3 aufgeklebt werden. Auf diese Weise können die Marker 3 in durch die Schablone vorgegebenen Positionen an der Kugel 2 angeordnet werden.

Man erkennt in Fig. 4, dass trotz der Rotationssymmetrie von Kugel 2 und mehrteiliger Schablone 20 bereits ein symmetriebrechendes Erhebungs-Vertiefungs-Paar zur definierten Anordnung der Schablone an der Kugel ausreicht, beispielsweise eine Erhebung bzw. Vertiefung in nur einer Krempe der zwei halbkugelförmigen Schablonen. Sind hingegen, wie in Fig. 4 dargestellt, mehrere Erhebungen und/oder Vertiefungen am Schaft 4 verteilt angeordnet, können bereits mit dem in Fig. 4 gezeigten Schablonenteil 20 alleine durch Umsetzen auf andere Erhebungen 8 alle Marker 3 auf der Kugel 2 sukzessive positioniert werden.

Die Fußplatte 5 wird, wie insbesondere in der Draufsicht der Fig. 2 erkennbar, mit vier weiteren von der CCD-Kamera 12 erfassbaren Markern 6, wie sie auch auf der Kugel 2 angeordnet sind, und vier von einem Laser-Tracker (nicht dargestellt) erfassbaren Retroreflektoren 7 bestückt. Sowohl die Marker 6 als auch die Retroreflektoren 7 in Form sogenannter Laser-Tracker-Nester, i.e. winkelverstellbar gelagerter Retroreflektoren, sind teilweise in der Fußplatte 5 versenkt und durch durchsichtige Abdeckung geschützt (nicht dargestellt). Durch sie bzw. die sie aufnehmenden Vertiefungen ist ein Messvorrichtungs-Bezugssystem M definiert (vgl. Fig. 1).

Anschließend wird die Messvorrichtung 1 vorab, beispielsweise mittels einer Koordinatenmessmaschine oder einer Bildauswertung, exakt vermessen. Dabei werden die Positionen der durch die Marker 3 definierten Maßkörper-Messpunkte relativ zu dem Messvorrichtungs-Bezugssystem M bestimmt, welches bezüglich der durch die Retroreflektoren bzw. Laser-Tracker-Nester 7 definierten Einmesspunkte und/oder der durch die an der Fußplatte 5 angeordneten Marker bzw. Befestigungseinrichtungs-Messpunkte 6 definiert ist. Somit ist eine Position $T_{M,3}$ zwischen dem Messvorrichtungs-Bezugssystem M und den Positionen der Marker 3 auf der Kugel 2 bekannt, wie in Fig. 1 durch einen Pfeil angedeutet.

Nun wird die Messvorrichtung 1 in der Roboterzelle durch Verschrauben ihrer Fußplatte 5 fixiert. Ein Laser-Tracker (nicht dargestellt) bestimmt die Positionen der durch die Retroreflektoren 7 definierten Einmesspunkte relativ zu einem umgebungsfesten manipulatorfesten Bezugssystem R in der Basis 11 des Roboters. Damit ist auch die Position $T_{R,M}$ zwischen dem manipulatorfesten Bezugs- und dem Messvorrichtungs-Bezugssystem bekannt (vgl. Fig. 1). Dies kann auch dadurch erfolgen, dass mit dem Laser-Tracker sowohl das Messvorrichtungs-Bezugssystem M als auch das manipulatorfeste Bezugssystem R eingemessen werden.

Bezugnehmend auf Fig. 1 wird nachfolgend zunächst eine relative Vermessung des Messroboters 10 zur Kompensation einer Temperaturdrift und zur Überprüfung der Messvorrichtung 1 erläutert.

Beispielsweise zu Beginn des Betriebs fährt der Roboter 10 mit seiner Kamera 12 verschiedene Messposen an, in denen mit der Kamera Marker 3 auf der Kugel 2 oder Marker 6 auf der Fußplatte 5 erfasst und ihre Position, beispielsweise in einem Kamera-Bezugssystem, durch eine Bilderkennung ermittelt wird. Diese ermittelte Position ist in Fig. 1 durch die Position $T_{TCP,3}$ bzw. $T_{TCP,6}$ angedeutet. In Fig. 1 ist einerseits ausgezogen eine Messpose des Roboters 10 zum Bestimmen der Position eines manipulatorfesten Referenzpunktes TCP und eines Maßkörper-Messpunktes 3 relativ zueinander und andererseits gestrichelt eine weitere Messpose des Roboters zur Bestimmen einer Position eines Befestigungseinrichtungs-Messpunktes 6 relativ zu dem manipulatorfesten Referenzpunkt TCP eingezeichnet. In einer bevorzugten Ausführung werden etwa 20 verschiedene Messposen angefahren. Auf Basis eines Robotermodells, das in Fig. 1 durch den Pfeil $T_{R,TCP}$ angedeutet ist, können diese Positionen auch in Positionen $T_{3,R}$ bzw. $T_{6,R}$ relativ zu dem basisfesten Bezugssystem R transformiert werden.

Während des Betriebs werden dann eine oder mehrere dieser Messposen erneut angefahren und wiederum Positionen $TT_{CP,3}$ des manipulatorfesten Referenzpunktes TCP relativ zu Maßkörper-Messpunkten 3 und Positionen $T_{TCP,6}$ des manipulatorfesten Referenzpunktes TCP relativ zu Befestigungseinrichtungs-Messpunkten 6 bestimmt, indem die Kamera 12 die Marker 3 bzw. 6 aufnimmt und eine Bilderkennung und -auswertung deren Position in dem kamerafesten Bezugssystem bestimmt.

Aus den Positionen der Marker 3 und 6 relativ zueinander in dem kamerafesten Bezugssystem können auch die Positionen $T_{M,3}$ der Maßkörper-Messpunkte 3 relativ zu dem bezüglich der Befestigungseinrichtungs-Messpunkte 6 definierten Messvorrichtungs-Bezugssystems M bestimmt werden.

Hat sich, beispielsweise durch eine Kollision mit der robotergeführten Kamera 12, der Maßkörper 2 unter Verformung des Schaftes 4 gegenüber der Fußplatte 5 verschoben und/oder verdreht, wie dies in Fig. 1 punktiert angedeutet ist, weichen diese Relativpositionen $T_{M,3}$ der Maßkörper-Messpunkte 3 relativ zu dem Messvorrichtungs-Bezugssystem M von denjenigen ab, die bei einer vorhergehenden oder anfänglichen Vermessung vor Ort oder bei der Herstellung der Messvorrichtung ermittelt wurden. Dementsprechend kann eine Verformung der Messvorrichtung 1 erkannt und, in einer bevorzugten Ausführung, durch rechnerische Berücksichtigung der aus der Abweichung der Relativpositionen ermittelten Verformung kompensiert werden. Mit anderen Worten werden Relativpositionen zwischen den Maßkörper-Messpunkten 3 und den Befestigungseinrichtungs-Messpunkten 6 ermittelt und aus einer Veränderung dieser Relativpositionen eine Verformung der Messvorrichtung 1 bestimmt:

$$\left(T_{TCP,3}, T_{TCP,6}\right)_{aktuell} \Rightarrow \left(T_{M,3}\right)_{aktuell}$$
$$\left(T_{M,3}\right)_{aktuell} - \left(T_{M,3}\right)_{Referenz} \Rightarrow Verformung \quad (1)$$

Vorliegend wird zur kompakteren Darstellung insbesondere auch eine Position oder die Veränderung einer Position eines Punktes, beispielsweise eines Maßkörper-Messpunktes 3, relativ zu anderen Punkten, beispielsweise Befestigungseinrichtungs-Messpunkten 6, als Position relativ zu einem durch die anderen Punkte definierten Bezugssystem, beispielsweise dem Befestigungseinrichtungs-Bezugssystem M, bzw. als Veränderung der Position relativ zu diesem Bezugssystem bezeichnet, wobei in der praktischen Umsetzung der Erfindung das Bezugssystem als solches nicht notwendigerweise definiert werden muss, sondern auch die Positionen der Punkte relativ zueinander direkt, beispielsweise als Differenz von Ortsvektoren, verwendet werden können.

Sind andererseits zwar die Relativpositionen zwischen Maßkörper-Messpunkten 3 und Befestigungseinrichtungs-Messpunkten 6 im Rahmen einer vorgebbaren Toleranz unverändert, weichen jedoch die Positionen $T_{TCP,3}$ der Maßkörper-Messpunkte 3 von denjenigen ab, die bei einer vorhergehenden oder anfänglichen Vermessung vor Ort ermittelt wurden, beruht dies auf einer Veränderung der Manipulatorkinematik, beispielsweise durch thermisch oder mechanisch, etwa durch eine Kollision, bedingte Verformungen von Robotergliedern, da sich die Kamera 12 trotz theoretisch identischer Messpose in einer anderen Position relativ zu den Markern 3 befindet. Dementsprechend können die Parameter eines kinematischen Robotermodells derart angepasst werden, dass die Differenz zu den vorher bestimmten Positionen $T_{TCP,3}$ der Maßkörper-Messpunkte 3 relativ zu dem manipulatorfesten Referenzpunkt TCP minimal werden. Mit anderen Worten kann das der Steuerung zugrundeliegende Robotermodell derart adaptiert werden, dass die Kamera 12 in der durch die Gelenkwinkel bestimmten, theoretisch identischen Messpose wieder dieselbe Position relativ zu den Markern 3 einnimmt. Gleichermaßen kann aus der Veränderung der Positionen der Marker 3 relativ zur Kamera 12 die Änderung der Manipulatorkinematik bestimmt und in dem Robotermodell berücksichtigt werden. Insbesondere können die nun gemessenen Positionen der Marker 3 mittels des Robotermodells in das basisfeste Bezugssystem transformiert und die Parameter des Robotermodells so adaptiert werden, dass sich wieder die bei einer vorhergehenden oder anfänglichen Vermessung vor Ort ermittelten Positionen ergeben:

$$\ddot{a}ndere \ T_{R,TCP} \ so, \ dass \ \left(T_{TCP,3}\right)_{aktuell} - \left(T_{TCP,3}\right)_{Referenz} \rightarrow 0 \ oder$$
$$\left(T_{TCP,3}\right)_{aktuell}, T_{R,TCP} \Rightarrow \left(T_{R,3}\right)_{aktuell};$$
$$\ddot{a}ndere \ T_{R,TCP} \ so, \ dass \ \left(T_{R,3}\right)_{aktuell} - \left(T_{R,3}\right)_{Referenz} \rightarrow 0$$

Vorzugsweise werden in einer solche Rekalibrierung auch Positionen von Befestigungseinrichtungs-Messpunkten 6 berücksichtigt. Im Gegensatz zu diesen auf der Fußplatte 5 angeordneten Markern 6 gestatten jedoch die auf die Kugel 2 aufgeklebten Marker 3 Positionserfassungen in unterschiedlichsten Messposen des Roboters 10, um so möglichst viele Modellparameter möglichst exakt anzupassen.

Durch die Vermessung der Marker 3 relativ zu dem Messvorrichtungs-Bezugssystem M, das bezüglich der Retroreflektoren 7 definiert ist, und die Vermessung dieser Einmesspunkte relativ zu dem manipulatorfesten Bezugssystem R sind auch die absoluten Positionen der Marker 3 im manipulatorfesten Bezugssystem R bekannt. Dies erleichtert zum einen die oben erläuterte Rekalibrierung zur Kompensation einer Temperaturdrift oder dergleichen. Denn auf Basis der im manipulatorfesten Bezugssystem R bekannten Positionen der Marker 3 können diese optimal angefahren werden. Insbesondere kann eine Bahnplanung in einem manipulatorfesten Bezugssystem R Umfahrungspunkte zum kollisionsfreien Anfahren von Messposen auf Basis dieser Positionen bestimmen. So können beispielsweise auf einer Sphäre durch Umfahrungspunkte, die radial von der Kugel 2 weg gegen die Marker 3 beabstandet sind, Hilfspunkte zur kollisionsfreien Fahrt um den Maßkörper 2 bestimmt werden.

Zum anderen ermöglicht es jedoch auch eine absolute Vermessung, um ein hochgenaues Robotermodell in einem definierten Arbeitsraum präzise zu kalibrieren.

Hierzu werden in prinzipiell gleicher Weise, wie vorstehend mit Bezug auf Fig. 1 und 4 beschrieben, vier Messvorrichtungen 1' (oder auch 1) so im Arbeitsraum angeordnet, dass sie ein Volumen aufspannen, innerhalb dessen das Robotermodell hochgenau kalibriert ist. Nachfolgend wird mit Bezug auf Fig. 3 nur auf die Unterschiede zu der vorstehend erläuterten Ausführung eingegangen.

Man erkennt, dass der Maßkörper 2' einer solchen Messvorrichtungen 1' würfelförmig ausgebildet ist. Auf jeder der fünf nicht mit dem Schaft 4 verbundenen Seitenflächen sind fünf Maßkörper-Messpunkte in Form von Sackbohrungen 3' angeordnet, die durch die Kamera 12 erfasst und deren Position mittels Bilderkennung und - auswertung ermittelt werden kann. Die von dem Laser-Tracker erfassbaren Einmesspunkte in Form der Retroreflektoren 7 sind bei dieser Ausführung in unmittelbarer Nähe zum Maßkörper 2' angeordnet, um Messfehler bei der Bestimmung der Absolutpositionen der geometrischen Merkmale 3' zu minimieren.

Wie vorstehend erläutert, werden die Positionen $T_{M,3'}$ der Sackbohrungen 3' relativ zu dem bezüglich der Einmesspunkte 7 definierten Messvorrichtungs-Bezugssystem M' vorab, beispielsweise durch eine Koordinatenmessmaschine, exakt vermessen. Aus den mittels Laser-Tracker vermessenen Positionen der Einmesspunkte 7 relativ zum basisfesten Bezugssystem R können so die absoluten Positionen $T_{R,3'}$ der Sackbohrungen 3' der in der Roboterzelle angeordneten Messvorrichtungen 3' im basisfesten Bezugssystem R bestimmt werden.

Nun werden die Positionen dieser Maßkörper-Messpunkte 3' der vier Messvorrichtungen 3' mittels der Kamera 12 bestimmt und auf Basis des hochgenauen Robotermodells ebenfalls in das basisfeste Bezugssystem R transformiert. Auf Basis der Abweichungen zwischen den Positionen der Bohrungen 3', die sich aus der mittels Laser-Tracker ermittelten Position des Messvorrichtungs-Bezugssystems M relativ zum manipulatorfesten Bezugssystem R und der mittels Koordinatemessmaschine ermittelten Position der Bohrungen 3' im Messvorrichtungs-Bezugssystems M ergeben, und den Positionen der Bohrungen 3', die sich aus der mittels Kamera 12 ermittelten Position der Bohrungen 3' relativ zum Kamera-Bezugssystem und der mittels Robotermodell ermittelten Position im basisfeste Bezugssystem R ergeben, können Parameter des hochgenauen Robotermodells für Positionen des TCPs innerhalb des durch die vier nicht in einer Ebene liegenden Maßkörper 2' aufgespannten Raumes präzise adaptiert werden:

$$\left(T_{M',3'}\right)\!,\!\left(T_{R,M'}\right) \Rightarrow \left(T_{R,3'}\right)_{tatsächlich}$$
$$\left(T_{TCP,3'}\right)\!,\!\left(T_{R,TCP}\right) \Rightarrow \left(T_{R,3'}\right)_{Modell}$$
$$\text{ändere } T_{R,TCP} \text{ so, dass } \left(T_{R,3'}\right)_{tatsächlich} - \left(T_{R,3'}\right)_{Modell} \rightarrow 0$$

Vorstehend wurden bevorzugte Ausführungen beschrieben, in denen mehrere Aspekte der vorliegenden Erfindung miteinander kombiniert sind. Die einzelnen Aspekte können jedoch auch jeweils alleine verwirklicht sein. So kann beispielsweise eine Rekalibrierung zur Temperaturdriftkompensation auch ohne Einmessen des Messvorrichtungs-Bezugssystems M mittels Laser-Tracker erfolgen, die Kenntnis der Position des Messvorrichtungs-Bezugssystems M relativ zum basisfesten System R erleichtert jedoch das Anfahren der Messposen. Gleichermaßen kann auch mit der Messvorrichtung 1 gemäß Fig. 1 eine Absolutvermessung zur Bestimmung der Parameter eines hochgenauen Robotermodells durchgeführt werden.

Bezugszeichenliste

| | |
|---|---|
| 1; 1' | Messvorrichtung |
| 2; 2' | Maßkörper |
| 3; 3' | Maßkörper-Messpunkt |
| 4 | Schaft |
| 5 | Fußplatte (Befestigungseinrichtung) |
| 6 | Befestigungseinrichtungs-Messpunkt |
| 7 | Einmesspunkt |
| 8 | Erhebung |
| 10 | Roboter |
| 11 | Roboterbasis |
| 12 | Kamera (Sensor) |
| 20 | Schablone(nhälfte) |
| 21 | Loch für Markierung der Maßkörper-Messpunktposition |
| | |
| $T_{X,Y}$ | Position zwischen X- und Y-System |
| R | manipulatorfestes Bezugssystem |
| M; M' | Messvorrichtungs-Bezugssystem |
| TCP | Tool Center Point |

**Patentansprüche**

1. Messvorrichtung (1:1') zur Vermessung eines Manipulators (10), mit einem Maßkörper (2; 2') mit wenigstens einem maßkörperfesten Messpunkt (3; 3') zur Bestimmung einer Position ($T_{TCP,3}$; $T_{TCP,3'}$) relativ zu einem manipulatorfesten Referenzpunkt (TCP); und einer mit dem Maßkörper verbundenen Befestigungseinrichtung (5) zur Fixierung an einer Umgebung;
mit wenigstens einem an der Befestigungseinrichtung angeordneten Messpunkt (6),
**dadurch gekennzeichnet, dass** Positionen von Maßkörper - Messpunkten relativ zu einem Messvorrichtungs - Bezugssystem bestimmt sind, welches bezüglich des Befestigungseinrichtungs - Messpunkte definiert ist.

2. Messvorrichtung nach Anspruch 1, **dadurch gekennzeichnet, dass** ein Maßkörper-Messpunkt und/oder ein Befestigungseinrichtungs-Messpunkt eine von einem, insbesondere optischen, Sensor (12) erfassbare Markierung (3) und/oder ein geometrisches Merkmal, insbesondere eine Aussparung (3') und/oder Erhebung aufweist.

3. Messvorrichtung nach einem der vorhergehenden Ansprüche, **dadurch gekennzeichnet, dass** ein mit der Messvorrichtung verbundene Einmesspunkt einen, insbesondere verstellbaren,
Sender, Empfänger und/oder Reflektor (7; 7') zum Aussenden, Empfangen bzw. Reflektieren von, insbesondere elektromagnetischer, Strahlung aufweist.

4. Messvorrichtung nach einem der vorhergehenden Ansprüche, **dadurch gekennzeichnet, dass** wenigstens ein Einmesspunkt (7; 7') an der' Befestigungseinrichtung (5) oder dem Maßkörper (2') angeordnet ist; und/oder dass ein an der Befestigungseinrichtung (5) angeordneter Einmesspunkt (7') und/oder Befestigungseinrichtungs-Messpunkt (6) in der Befestigungseinrichtung wenigstens teilweise versenkt und/oder durch eine Abdeckung geschützt ist.

5. Messvorrichtung nach einem der vorhergehenden Ansprüche, **dadurch gekennzeichnet, dass** sie wenigstens drei, Insbesondere wenigstens vier Maßkörper-Messpunkte (3; 3'), Befestigungseinrichtungs-Messpunkte (6) und/oder Einmesspunkte (7; 7') aufweist; und/oder dass der Maßkörper (2; 2') im Wesentlichen kugel- oder quader- insbesondere würfelförmig ist.

6. Messvorrichtung nach einem der vorhergehenden Ansprüche, **dadurch gekennzeichnet, dass** der Maßkörper und ein, insbesondere schaftförmiges, Verbindungselement (4) zur Verbindung mit der Befestigungseinrichtung (5) einstückig miteinander ausgebildet sind; und/oder dass der Maßkörper (2; 2') und/oder ein, insbesondere schaftförmiges, Verbindungselement (4) zur Verbindung mit der Befestigungseinrichtung (5) eine geringe Wärmeverformung aufweist.

7. Massvorrichlung nach Anspruch 1, **gekennzeichnet durch** wenigstens einen mit der Messvorrichtung verbundenen Ein messpunkt (7, 7') zur Bestimmung einer Position ($T_{R,m}$; $T_{R,m'}$) relativ zu der Umgebung

8. Herstellanordnung, umfassend eine Messvorrichtung (1)
nach einem der vorhergehenden Ansprüche, **gekennzeichnet durch** eine, insbesondere mehrteilige, Schablone (20) zur Anordnung wenigstens eines Maßkörper-Messpunktes (3) an dem Maßkörper der Messvorrichtung, die in einer definierten Orientierung an dem Maßkörper anordenbar ist.

9. Herstellanordnung nach Anspruch 8, **dadurch gekennzeichnet, dass** eine von der die Messvorrichtung (1) und der Schablone (20) wenigstens eine Erhebung (8) und/oder Aussparung und die andere von der die Messvorrichtung und der Schablone (20) wenigstens eine, vorzugsweise komplementäre, Aussparung bzw. Erhebung aufweisen, wobei in einer definierten Orientierung wenigstens eine Erhebung in eine Aussparung eingreift, um die Orientierung festzulegen.

10. Messsystem zur Vermessung eines Manlpulators (10), mit wenigstens einer Messvorrichtung (1; 1') nach einem der vorhergehenden Ansprüche 1 bis 7;
einem, insbesondere umgebungsfesten, Sensor zur Bestimmung einer Position von Einmesspunkten der Messvorrichtung relativ zu der Umgebung; und/oder einem, insbesondere manipulatorgeführten, Sensor (12) zur Bestimmung einer Position von Befestigungseinrichtungs-Messpunkten (6) der Messvorrichtung.

11. Messsystem nach Anspruch 10, **dadurch gekennzeichnet, dass** sie wenigstens vier nicht komplanare Maßkörper (1') aufweist.

**12.** Verfahren zur Vermessung eines Manipulators (10) unter Verwendung einer Messvorrichtung nach einem der vorhergehenden Ansprüche 1 bis 7, mit den Schritten:
Anfahren wenigstens einer Messpose mit dem Manipulator (10); Bestimmen der Position ($T_{TCP,3}$; $T_{TCP,3'}$) eines manipulatorfesten Referenzpunktes (TCP) und eines Maßkörper-Messpunktes (3; 3') relativ zueinander; und Bestimmen einer Position ($T_{M,3}$; $T_{M,3'}$) wenigstens eines Maßkörper-Messpunktes (3) relativ zu einem bezüglich Befestigungseinrichtungs-Messpunkten (6) definierten Messvorrichtungs-Bezugssystem (M).

**13.** Verfahren nach Anspruch 12, **dadurch gekennzeichnet, dass** eine Messpose auf Basis eines bezüglich Befestigungseinrichtungs-Messpunkten (6) definierten Messvorrichtungs-Bezugssystems (M) angefahren wird.

**14.** Verfahren nach Anspruch 13, **dadurch gekennzeichnet, dass** auf Basis des Messvorrichtungs-Bezugssystems (M) Umfahrungspunkte zum kollisionsfreien Anfahren einer Messpose vorgegeben werden.

**15.** Verfahren zur Herstellung eines Maßkörpers einer Messvorrichtung, insbesondere nach einem der Ansprüche 1 bis 7, mittels einer Herstellanordnung nach Anspruch 8 oder 9, mit den Schritten:

Anordnen der Schablone (20) an dem Maßkörper (2) der Messvorrichtung (1) in einer definierten Orientierung; und
Anordnung wenigstens eines Maßkörper-Messpunktes (3) an dem Maßkörper in einer durch die Schablone (20) vorgegebenen Position (21).

**16.** Verfahren zur Vermessung eines Manipulators (10) nach einem des vorgehenden Ansprüche 12-15 unter Venwendung einer Messvorrichtung nach einem der vorhergehenden Ansprüche 1 bis 7, mit den Schritten:

Anfahren wenigstens einer Messpose mit dem Manipulator (10); und
Bestimmen der Position ($T_{TCP,3}$; $T_{TCP,3'}$) eines manipulatorfesten Referenzpunktes (TCP) und eines Maßkörper-Messpunktes (3; 3') relativ zueinander; und
vorzugsweise wenigstens einem der Schritte:

Bestimmen einer Position ($T_{M,3}$; $T_{M,3'}$) wenigstens eines Maßkörper-Messpunktes (3) relativ zu einem bezüglich Einmesspunkten (7; 7')
definierten Messvorrichtungs-Bezugssystem (M);
Bestimmen einer Position von Einmesspunkten (7, 7') und/oder
Befestigungseinrichtungs-Messpunkten (6) relativ zu einem manipulatorfesten Bezugssystem (R; TCP), insbesondere relativ zu dem manipulatorfesten
Referenzpunkt (TCP), wobei vorzugsweise auf Basis der Position von Meßkörper-Messpunkten (3; 3') relativ zu einem manipulatorfesten Bezugssystem (TCP; R) oder
einem Messvorrichtungs-Bezugssystem (M) ein Zustand des Manipulators und/oder der Messvorrichtung (1; 1') ermittelt wird; und oder
Bestimmen einer Position von Einmesspunkten (7; 7') relativ zu der Umgebung.

**17.** Steuervorrichtung für einen Manipulator (10), die zur Durchführung eines Verfahrens nach einem der vorhergehenden Ansprüche 12 bis 16 eingerichtet ist.

**18.** Computerprogrammprodukt mit Programmcode, der auf einem maschinenlesbaren Träger gespeichert ist und ein Computerprogramm umfasst, das ein Verfahren nach einem der Ansprüche 12 bis 16 ausführt, wenn es in einer Steuervorrichtung nach Anspruch 17 abläuft.

## Claims

**1.** A measuring device (1; 1') for measuring a manipulator (10), with a scale (2; 2') with at least one scale-fixed measuring point (3; 3') for determining a position ($T_{TCP,3}$; $T_{TCP,3'}$) relative to a manipulator-fixed reference point (TCP); and a fastening means (5), which is connected to the scale, for fixating to an environment; comprising at least one measuring point (6), which is located on the fastening means,
**characterized in that**
positions of scale measuring points are determined relative to a measuring device reference system which is defined with respect to the fastening means measuring points.

**2.** A measuring device according to claim 1, **characterized in that** a scale measuring point and/or a fastening means measuring point comprises a marking (3), which is detectable by an, in particular optical, sensor (12), and/or a geometric feature, in particular a cavity (3') and/or an elevation.

**3.** A measuring device according to one of the preceding claims, **characterized in that** a measuring point for calibration, which is connected to the measuring device, comprises an, in particular adjustable, sender, receiver and/or reflector (7; 7') for sending, receiving or reflecting respectively of, in particular electromagnetic, radiation.

**4.** A measuring device according to one of the preceding claims, **characterized in that** at least one measuring point for calibration (7; 7') is located on the fastening means (5) or the scale (2'); and/or that a measuring point for calibration (7'), which is arranged on the fastening means (5), and/or a fastening means measuring point (6) is at least partly sunk-in into the fastening means and/or protected by a cover.

**5.** A measuring device according to one of the preceding claims, **characterized in that** it comprises at least three, in particular at least four, scale measuring points (3; 3'), fastening means measuring points (6) and/or measuring points for calibration (7; 7'); and/or that the scale (2; 2') is essentially ball-shaped or box-shaped, in particular cube-shaped.

**6.** A measuring device according to one of the preceding claims, **characterized in that** the scale and an, in particular shaft-shaped, connecting element (4) for connecting with the fastening means (5), are formed together in one piece; and/or that the scale (2; 2') and/or an, in particular shaft-shaped, connecting element (4) for connecting with the fastening means (5), comprise a low thermal deformation.

**7.** A measuring device according to claim 1, **characterized by** at least one measuring point for calibration (7; 7'), which is connected to the measuring device, for determining a position ($T_{R,M}$; $T_{R,M'}$) relative to the environment.

**8.** A manufacturing arrangement comprising a measuring device (1) according to one of the preceding claims, **characterized by** an, in particular multipart, template (20) for arranging at least one scale measuring point (3) on the scale of the measuring device, said template being arrangeable in a defined orientation on the scale.

**9.** A manufacturing arrangement according to claim 8, **characterized in that** one of the measuring device (1) and the template (20) comprises at least one elevation (8) and/or cavity and the other of the measuring device and the template (20) comprises at least one, preferably complementary, cavity or elevation respectively, wherein in a defined orientation at least one elevation joins in a cavity, for defining the orientation.

**10.** A measuring system for measuring a manipulator (10), with at least one measuring device (1; 1') according to one of the preceding claims 1 to 7; comprising an, in particular environment-fixed, sensor for determining a position of measuring points of the measuring device relative to the environment; and/or an, in particular manipulator-led, sensor (12) for determining a position of fastening means measuring points (6) of the measuring device.

**11.** A measuring system according to claim 10, **characterized in that** it comprises at least four non-coplanar scales (1').

**12.** A method for measuring a manipulator (10) using a measuring device according to one of the preceding claims 1 to 7, comprising the steps:

moving to at least one measuring pose with the manipulator (10);
determining the position ($T_{TCP,3}$; $T_{TCP,3'}$) of a manipulator-fixed reference point (TCP) and of a scale measuring point (3; 3') relative to each other; and
determining a position ($T_{M,3}$; $T_{M,3'}$) of at least one scale measuring point (3) relative to a measuring device reference system (M) that is defined with respect to fastening means measuring points (6).

**13.** A method according to claim 12, **characterized in that** it is moved to a measuring pose on the basis of a measuring device reference system (M) that is defined with respect to fastening means measuring points (6).

**14.** A method according to claim 13, **characterized in that** on the basis of the measuring device reference system (M) bypass points for collision-free moving to a measuring pose are predetermined.

**15.** A method for manufacturing a scale of a measuring device, in particular according to one of the claims 1 to 7, by a manufacturing arrangement according to claim 8 or 9, comprising the steps:

Arranging the template (20) on the scale (2) of the measuring device (1) in a defined orientation; and

Arranging of at least one scale measuring point (3) on the scale in a position (21) that is predetermined by the template (20).

16. A method for measuring a manipulator (10) according to one of the preceding claims 12 to 15 using a measuring device according to one the preceding claims 1 to 7, comprising the steps:

moving to at least one measuring pose with the manipulator (10); and

determining the position ($T_{TCP,3}$, $T_{TCP,3'}$) of a manipulator-fixed reference point (TCP) and of a scale measuring point (3; 3') relative to each other; and

preferably comprising at least one of the steps:

determining a position ($T_{M,3}$; $T_{M,3'}$) of at least one scale measuring point (3) relative to a measuring device reference system (M) that is defined with respect to measuring points for calibration (7, 7');

determining a position of measuring points for calibration (7, 7') and/or

fastening means measuring points (6) relative to a manipulator-fixed reference system (R; TCP), in particular relative to the manipulator-fixed reference point (TCP), preferably wherein on the basis of the position of scale measuring points (3; 3') relative to a manipulator-fixed reference system (TCP; R) or a measuring device reference system (M) a state of the manipulator and/or of the measuring device (1; 1') is determined; and/or

determining a position of measuring points for calibration (7; 7') relative to the environment.

17. A control device for a manipulator (10), that is arranged for carrying-out a method according to one of the preceding claims 12 to 16.

18. A computer program product with program code that is stored on a machine readable carrier and comprises a computer program, which carries-out a method according to one of the claims 12 to 16, if it runs in a control device according to claim 17.

**Revendications**

1. Dispositif de mesure (1 ; 1') destiné à mesurer un manipulateur (10), pourvu d'un corps de mesure (2 ; 2') présentant au moins un point de mesure (3 ; 3') fixé au corps de mesure et destiné à déterminer une position ($T_{TCP,3}$ ; $T_{TCP,3'}$) par rapport à un point de référence (TCP) fixé au manipulateur, et d'un dispositif de fixation (5) relié au corps de mesure et destiné à être fixé à une zone environnante, et présentant un point de mesure (6) disposé sur le dispositif de fixation,

   **caractérisé en ce que** les positions des points de mesure du corps de mesure sont déterminées par rapport à un système de référence du dispositif de mesure, lequel système est défini par rapport aux points de mesure du dispositif de fixation.

2. Dispositif de mesure selon la revendication 1, **caractérisé en ce qu'**un point de mesure du corps de mesure et/ou un point de mesure du dispositif de fixation présente un marquage (3) pouvant être détecté par un capteur (12), en particulier optique et/ou une caractéristique géométrique, en particulier un creux (3') et/ou un pic.

3. Dispositif de mesure selon l'une quelconque des revendications précédentes, **caractérisé en ce qu'**un point d'étalonnage relié au dispositif de mesure comprend un émetteur, un récepteur et/ou un réflecteur (7 ; 7'), en particulier réglable, destiné à émettre, à recevoir ou à réfléchir un rayonnement, en particulier électromagnétique.

4. Dispositif de mesure selon l'une quelconque des revendications précédentes, **caractérisé en ce qu'**au moins un point d'étalonnage (7 ; 7') est situé sur le dispositif de fixation (5) ou sur le corps de mesure (2'), et/ou **en ce qu'**un point d'étalonnage (7') situé sur le dispositif de fixation (5) et/ou le point de mesure de dispositif de fixation (6) est enfoncé au moins en partie dans le dispositif de fixation et/ou protégé par un couvercle.

5. Dispositif de mesure selon l'une quelconque des revendications précédentes, **caractérisé en ce qu'**il comprend au moins trois, en particulier quatre points de mesure de corps de mesure (3 ; 3'), points de mesure de dispositif de fixation (6) et/ou points d'étalonnage (7 ; 7'), et/ou **en ce que** le corps de mesure (2 ; 2') est sensiblement en forme de sphère ou de parallélépipède, en particulier de cube.

**6.** Dispositif de mesure selon l'une quelconque des revendications précédentes, **caractérisé en ce que** le corps de mesure et un élément de liaison (4), en particulier en forme de tige, destiné à établir une liaison avec le dispositif de fixation (5), sont réalisés d'une seule pièce, et/ou **en ce que** le corps de mesure (2 ; 2') et/ou un élément de liaison (4), en particulier en forme de tige, destiné à établir une liaison avec le dispositif de fixation (5), présente une déformation à chaud réduite.

**7.** Dispositif de mesure selon la revendication 1, **caractérisé par** au moins un point d'étalonnage (7 ; 7') relié au dispositif de mesure et destiné à déterminer une position ($T_{R,m}$ ; $T_{Rm'}$) par rapport au zones environnantes.

**8.** Ensemble de fabrication, comprenant un dispositif de mesure (1) selon l'une quelconque des revendications précédentes, **caractérisé par** un gabarit (20), en particulier en plusieurs parties, destiné à placer au moins un point de mesure de corps de mesure (3) sur le corps de mesure du dispositif de mesure, lequel peut être disposé sur le corps de mesure dans une orientation définie.

**9.** Ensemble de fabrication selon la revendication 8, **caractérisé en ce que** l'un parmi le dispositif de mesure (1) et le gabarit (20) présente au moins un pic (8) et/ou un creux, et l'autre parmi le dispositif de mesure et le gabarit (20) présente au moins un creux ou un pic, de préférence complémentaire, au moins un pic s'insérant dans un creux dans une orientation définie, afin de bloquer l'orientation.

**10.** Système de mesure destiné à mesurer un manipulateur (10),
pourvu d'au moins un dispositif de mesure (1 ; 1') selon l'une quelconque des revendications précédentes 1 à 7, d'un capteur, en particulier fixé aux zones environnantes, et destiné à déterminer une position de points d'étalonnage du dispositif de mesure par rapport aux zones environnantes, et/ou d'un capteur (12), en particulier guidé par le manipulateur, destiné à déterminer une position des points de mesure de dispositif de fixation (6) du dispositif de mesure.

**11.** Système de mesure selon la revendication 10, **caractérisé en ce qu'**il comprend au moins quatre corps de mesure (1') non coplanaires.

**12.** Procédé de mesure d'un manipulateur (10) au moyen d'un dispositif de mesure selon l'une quelconque des revendications 1 à 7, comprenant les étapes suivantes consistant à :

mettre en marche une pose de mesure au moyen du manipulateur (10) ;
déterminer la position ($T_{TCP,3}$ ; $T_{TCP,3'}$) d'un point de référence (TCP) fixé au manipulateur et d'un point de mesure de corps de mesure (3 ; 3') l'un par rapport à l'autre ; et
déterminer une position ($T_{M,3}$ ; $T_{M,3'}$) d'au moins un point de mesure de corps de mesure (3) par rapport à un système de référence de dispositif de mesure (M) défini par rapport aux points de mesure de dispositif de fixation (6).

**13.** Procédé selon la revendication 12, **caractérisé en ce qu'**une pose de mesure est mise en marche sur la base d'un système de référence de dispositif de mesure (M) défini par rapport aux points de mesure de dispositif de fixation (6).

**14.** Procédé selon la revendication 13, **caractérisé en ce que** des points de contournement destinés à la mise en marche sans collision d'une pose de mesure sont prédéfinis sur la base du système de référence de dispositif de mesure (M).

**15.** Procédé de fabrication d'un corps de mesure d'un dispositif de mesure, en particulier selon l'une quelconque des revendications 1 à 7, au moyen d'un ensemble de fabrication selon la revendication 8 ou 9, comprenant les étapes suivantes consistant à :

disposer le gabarit (20) sur le corps de mesure (2) du dispositif de mesure (1) dans une orientation définie ; et placer au moins un point de mesure de corps de mesure (3) sur le corps de mesure dans une position (21) prédéfinie par le gabarit (20).

**16.** Procédé de mesure d'un manipulateur (10) selon l'une quelconque des revendications 12 à 15 au moyen d'un dispositif de mesure selon l'une quelconque des revendications 1 à 7, comprenant les étapes suivantes consistant à :

mettre en marche au moins une pose de mesure au moyen du manipulateur (10) ; et

déterminer la position ($T_{TCP,3}$ ; $T_{TCP,3'}$) d'un point de référence (TCP) fixé au manipulateur et d'un point de mesure de corps de mesure (3 ; 3') l'un par rapport à l'autre ; et

comprenant de préférence au moins l'une des étapes suivantes consistant à :

déterminer une position ($T_{M,3}$ ; $T_{M,3'}$) d'au moins un point de mesure de corps de mesure (3) par rapport à un système de référence de dispositif de mesure (M) défini par rapport aux zones environnantes (7 ; 7') ;

déterminer une position de points de mesure (7, 7') et/ou de points de mesure de dispositif de fixation (6) par rapport à un système de référence (R ; TCP) fixé au manipulateur, en particulier par rapport au point de référence (TCP) fixé au manipulateur, un état du manipulateur et/ou du dispositif de mesure (1 ; 1') étant déterminé de préférence sur la base de la position de points de mesure de corps de mesure (3 ; 3') par rapport à un système de référence (TCP ; R) fixé au manipulateur ou à un système de référence de dispositif de mesure (M) ; et/ou

déterminer une position de points d'étalonnage (7 ; 7') par rapport à l'environnement.

17. Dispositif de commande pour un manipulateur (10), lequel est conçu pour mettre en oeuvre un procédé selon l'une quelconque des revendications 12 à 16.

18. Produit-programme informatique pourvu d'un code de programme, lequel est mis en mémoire sur un support pouvant être lu par une machine et comprend un procédé selon l'une quelconque des revendications 12 à 16, lorsqu'il se déroule dans un dispositif de commande selon la revendication 17.

## Fig. 1

## Fig. 2

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004024378 A1
- DE 19826395 A1
- WO 2008107715 A2
- WO 2005108020 A1

- WO 0100370 A1
- WO 9936216 A
- WO 2008101737 A1
- DE 19507805 A1